Europäisches Patentamt

European Patent Office

Office européen des brevets

(11) Veröffentlichungsnummer: **0 493 717 A1**

## EUROPÄISCHE PATENTANMELDUNG

(21) Anmeldenummer: **91121272.8**

(22) Anmeldetag: **11.12.91**

(51) Int. Cl.5: **G02B 6/36**, G02B 6/44

(30) Priorität: **29.12.90 DE 9017569 U**

(43) Veröffentlichungstag der Anmeldung:
**08.07.92 Patentblatt 92/28**

(84) Benannte Vertragsstaaten:
**AT BE CH DE DK ES FR GB GR IT LI LU NL SE**

(71) Anmelder: **Dietz, Volker**
**Mozartring 16**
**W-8011 Baldham(DE)**
Anmelder: **KABELTECHNIK DIETZ GmbH**
**Schwanseestrasse 53**
**W-8000 München 90(DE)**

(72) Erfinder: **Dietz, Volker**
**Mozartring 16**
**W-8011 Baldham(DE)**

(74) Vertreter: **Neidl-Stippler, Cornelia, Dr.**
**Rauchstrasse 2**
**W-8000 München 80(DE)**

(54) **Spleissbox für Lichtwellenleiter.**

(57) Die Erfindung betrifft eine Spleißbox für Lichtwellenleiter mit einem Bodenteil (12) mit einer Spleißschutzhalterung (16) und Umlenkeinrichtungen (18) sowie einem Schutzdeckel (14), wobei mindestens zwei Öffnungen (22, 24) in mindestens einer Wand der Spleißbox (10) für den Ein- und Austritt von Lichtwellenleitern sowie eine Befestigungseinrichtung (26) für die Spleißbox vorgesehen sind.

FIG. 1

Rank Xerox (UK) Business Services

Die Erfindung betrifft eine Spleißbox für Lichtwellenleiter.

Lichtwellenleiter sind meist aus Glasfasern oder Polymerfasern hergestellt, wobei die Leitung der Lichtwellen durch Totalreflexion an den Wänden der Fasern stattfindet. Dabei ist es ein Problem bei Lichtwellenleitern, diese miteinander zu verbinden oder aber auch, Stecker an diesen anzubringen. Stecker für Lichtwellenleiter sind im Handel mit sog. Faserpigtails erhältlich, die an das mit dem Stecker zu verbindende Kabel durch einen Spleiß angeschlossen werden. Es sind verschiedene Spleißtechniken im Fachgebiet bekannt, bspw. die sogenannte Fusionstechnik, bei der aneinandergebrachte Faserenden durch einen Lichtbogen verschweißt werden. Ein Problem bei der Spleißtechnik ist dabei die Fragilität der Spleißstellen. Es war bisher üblich, die Spleißstellen zwischen LWL und "pigtail" mittels eines sog. "Spleißschutzes" zu schützen und sodann in eine an sich bekannte Spleißschutzhalterung einzubringen. Spleißboxen sind auch bekannt.

Allerdings war die Spleißstelle dann immer noch anfällig gegen Druck- und Zugbelastungen, sodaß das Anbringen von Steckern an Lichtwellenleitern, insbesondere innerhalb von Kabelkanälen ein Problem darstellte.

Die Aufgabe wird erfindungsgemäß gelöst durch eine Mini-Spleißbox für Lichtwellenleiter, gekennzeichnet durch a) ein Bodenteil mit einer Spleißschutzhalterung und Umlenkeinrichtungen und b) einen Schutzdeckel, wobei mindestens zwei Öffnungen in mindestens einer Wand der Spleißbox für den Ein- und Austritt von Lichtwellenleitern sowie eine Befestigungseinrichtung für die Spleißbox vorgesehen sind.

Vorteilhafte Weiterbildungen der Erfindung ergeben sich aus den Unteransprüchen.

Spleißschutzhalterungen als solche sind bereits bekannt und sind bspw. aus Thermoplast erhältlich. Die bekannten Spleißschutzhalterungen besaßen allerdings große Abmessungen und waren daher schwierig zu verlegen.

Demgegenüber weist die erfindungsgemäße Spleißbox bei kleinen Abmessungen eine einfache Handhabbarkeit auf.

Die erfindungsgemäße Spleißbox ermöglicht erstmals, die Spleißstelle von ein oder mehreren Lichtwellenleitern sicher zu verpacken und diese gegenüber Belastungen zu schützen.

Die Spleißbox kann aus Metall oder zumindest teilweise aus Kunststoff sein.

Es können Umlenkbolzen am Deckel- oder Bodenteil der Spleißbox vorgesehen sind, die ggf. auch als Abstandshalter zwischen Deckel und Boden angeordnet sind.

Um diese Umlenkbolzen kann ein Lichtwellenleiter schlaufenartig herumgelegt werden, um eine Spleißreserve zu bilden.

Bevorzugt sind Öffnungen für Zugentlastungsabbinder in den Wänden der Spleißbox vorgesehen.

Die erfindungsgemäße Spleißbox ermöglicht es, auf kleinem Raum Spleißstellen zu versorgen und kann in handelsüblichen Einbaudosen für Kabelkanäle oder Geräteeinbauten eingebaut werden und ist prinzipiell immer dann einsetzbar, wenn Schutzmaßnahmen für Lichtwellenleiteranschlüsse notwendig sind.

Die erfindungsgemäße Spleißbox ist auch für Aufputzdosen geeignet und ist für alle üblichen Lichtwellenleiteranschlüsse vorgesehen.

Durch die erfindungsgemäße Spleißbox ist es in überraschender Weise erstmals möglich, die problematischen Spleiße von Lichtwellenleitern, die in Lichtwellenleiternetzwerken aufgrund ihrer Fragilität schwierig zu handhaben waren, so gut zu schützen, daß eine problemlose Verarbeitung möglich ist.

Die erfindungsgemäße Spleißbox kann weiterhin Befestigungseinrichtungen, wie Bohrungen, Halter od. dgl. dem Fachmann geläufige Befestigungsmittel aufweisen, mittels derer sie lösbar in einer Lichtwellenleiterdose befestigbar ist.

Ein weiterer Vorteil der erfindungsgemäßen Spleißbox besteht darin, daß sie sehr geringe Abmessungen hat und demzufolge mehrere Spleiße raumsparend versorgt werden können.

Eine bevorzugte Ausführungsform der Erfindung, auf die diese im übrigen keineswegs beschränkt ist, wird im folgenden anhand der anliegenden Zeichnung erläutert, in der zeigt:

Fig. 1 eine Draufsicht auf die Innenseite des Bodenteils einer Spleißbox;

Fig. 2 eine Draufsicht auf den Schutzdeckel der Spleißbox,

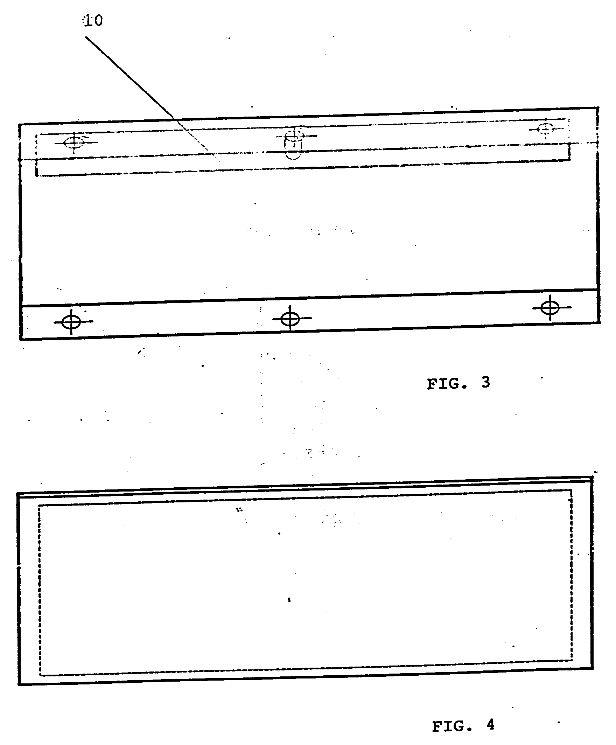

Fig. 3 eine Draufsicht auf die erfindungsgemäße Spleißbox und

Fig. 4 eine Seitenansicht der Fig. 3.

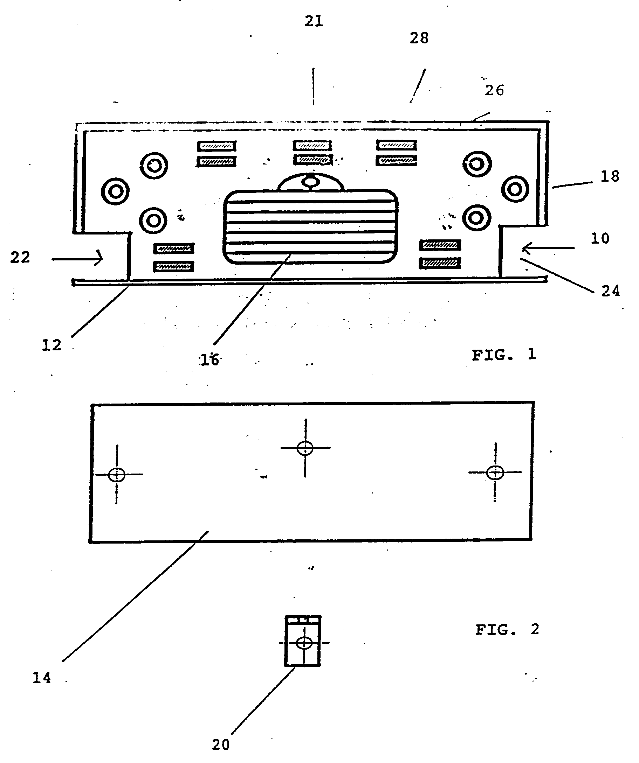

Die erfindungsgemäße Spleißbox besitzt bei einer bevorzugten Ausführungsform der Erfindung ein Bodenteil, wobei eine bevorzugte Ausgestaltung desselben in Fig. 1 dargestellt ist. Dort ist ersichtlich, daß auf einem metallischen Bodenteil 12 mit im wesentlichen rechtwinkelig dazu verlaufenden, hier einstückig mit diesem ausgebildeten Wänden eine an sich bekannte Spleißschutzhalterung 16 befestigt ist, bspw. mittels einer Schraube oder Niete, es ist aber auch möglich, diese Spleißschutzhalterung 16 auf das Bodenteil 12 aufzukleben. Wie in der Fig. 1 dargestellt, wird bei der Ausführungsform eine Spleißschutzhalterung 16, ein mehrere parallele, oben offene Kanäle aufweisendes Teil, bspw. mit den Abmessungen 4 bis 5 mm Länge und 1,5 bis 2mm Breite, wobei die oben offenen Kanäle eine Breite von etwa 2mm aufweisen und die die Kanäle begrenzenden Rippen etwa 1-2 mm hoch sind, eingesetzt. Diese Spleißschutzhalterung, in die der Spleiß befestigt wird, ist bevorzugt zentral auf dem Bodenteil befestigt. Auf dem Bodenteil 12 sind ferner Umlenkbolzen 18 vorgesehen, die bei der hier dargestellten Ausführungsform Innenbohrungen aufweisen, an denen der Deckel 14 mittels durch Bohrungen im Deckel 14 verlaufender Schrauben lösbar befestigt ist. Der Deckel 14 kann aber auf jede andere Art und Weise am Bodenteil/Wänden befestigt sein, wie durch ein Scharnier - so daß der Deckel aufklappbar ist - od. dgl. auf. In zwei gegenüberliegenden Seitenwänden sind bei der hier dargestellten Ausführungsform Kabelöffnungen vorgesehen, durch die Lichtwellenleiterkabel und "pigtail" eingebracht werden. Die jeweiligen Glasfaserkabelteile werden in Schlaufen um die Umlenkbolzen verlegt, so daß eine Spleißreserve gegeben ist. Ferner ist es bevorzugt, wenn Öffnungen - hier als Schlitze 21 ausgebildet, im Bodenteil vorgesehen sind, durch die Plastikabbinder zur Befestigung der Kabel am Bodenteil geführt werden können.

Auf das Bodenteil kann der in Fig. 2 dargestellte Schutzdeckel, der hier als ein gerades Blechzuschnitt ausgebildet ist, aufgelegt werden.

Bei der hier dargestellten Ausführungsform ist auf dem Schutzdeckel 14 eine Bohrung zur Befestigung der Spleißbox, bspw. in einer Dose oder an einem Kabelkanal, angebracht.

Die Abmessungen der hier dargestellten Ausführungsform einer Spleißbox sind: Höhe zwischen 1 bis 2 cm; Länge zwischen 10 bis 12 cm; Breite etwa 5 cm - selbstverständlich können diese Maße je nach Anforderung variieren. Es ist aber festzustellen, daß die erfindungsgemäße Spleißbox sehr kleine Abmessungen besitzt, die die Handhabung von Kabelspleißverbindungen gegenüber den bisher verwandten Spleißschutzeinrichtungen erheblich vereinfachen.

In den Fig. 2 ist eine an einer Einbaudose über Winkelteile befestigte erfindungsgemäße Spleißbox dargestellt.

**Patentansprüche**

1. Spleißbox für Lichtwellenleiter, gekennzeichnet durch
   a) ein Bodenteil (12) mit einer Spleißschutzhalterung (16) und Umlenkeinrichtungen (18) und
   b) einen schutzdeckel (14),
   wobei mindestens zwei Öffnungen ( 22, 24 ) in mindestens einer Wand der spleißbox (10) für den Ein- und Austritt von Lichtwellenleitern sowie eine Befestigungseinrichtung (26) für die Spleißbox vorgesehen sind.

2. Spleißbox nach Anspruch 1, dadurch gekennzeichnet, daß die Spleißbox aus Metall ist und durch die kleinen Abmessungen in handelsübliche Schalterdosen paßt.

3. Spleißbox nach Anspruch 1, dadurch gekennzeichnet, daß die Spleißbox mindestens teilweise aus Kunststoff ist.

4. Spleißbox nach irgendeinem der vorangehenden Ansprüche, dadurch gekennzeichnet, daß die Umlenkeinrichtungen Umlenkbolzen am Bodenteil der Spleißbox sind, die auch als Abstandshalter zwischen Deckel und Boden angeordnet sind.

5. Spleißbox nach irgendeinem der vorangehenden Ansprüche, dadurch gekennzeichnet, daß Öffnungen (21) für Zugentlastungsabbinder in den Wänden der Spleißbox vorgesehen sind.

FIG. 1

FIG. 2

10

FIG. 3

FIG. 4

## EINSCHLÄGIGE DOKUMENTE

EP 91121272.8

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | EP - A - 0 216 073<br>(W. ROSE GMBH)<br>    * Spalte 2, Zeile 42 -<br>    Spalte 4, Zeile 31 * | 1,3 | G 02 B 6/36<br>G 02 B 6/44 |
| Y | -- | 2,4 | |
| Y | DE - A - 2 914 217<br>(LICENTIA PATENT-VERWALTUNGS-<br>GMBH)<br>    * Fig. 1-4 * | 4 | |
| A | -- | 1 | |
| Y | DE - A - 3 835 688<br>(ANT NACHRICHTENTECHNIK GMBH)<br>    * Fig. 1,2; Spalte 1,<br>    Zeilen 58-61 * | 2 | |
| A | -- | 1 | |
| A | US - A - 4 840 449<br>(GHANDEHARIZADEH)<br>    * Fig. 1-3,6,7 *<br>-- | 1,4 | RECHERCHIERTE SACHGEBIETE (Int Cl⁵) |
| A | EP - A - 0 342 180<br>(FELTEN & GUILLEAUME)<br>    * Fig. 1,2,4 *<br>---- | 1,3,5 | G 02 B 6/00 |

Der vorliegende Recherchenbericht wurde für alle Patentansprüche erstellt.

| Recherchenort | Abschlußdatum der Recherche | Prüfer |
|---|---|---|
| WIEN | 23-03-1992 | GRONAU |